# EUROPÄISCHE PATENTSCHRIFT

(11) **EP 1 394 026 B1**
(45) Veröffentlichungstag und Bekanntmachung des Hinweises auf die Patenterteilung: **18.04.2007**
(21) Anmeldenummer: 03019147.2
(22) Anmeldetag: 25.08.2003
(51) Int. Cl.: B62J 1/00

(54) **Fahrradsattel**
Bicycle saddle
Selle de bicyclette

(30) Priorität: 29.08.2002 DE 20213536 U
(43) Veröffentlichungstag der Anmeldung: 03.03.2004
(73) Patentinhaber: Arnold, Franc, 56068 Koblenz (DE)
(72) Erfinder: Arnold, Franc, 56068 Koblenz (DE)
(74) Vertreter: von Kirschbaum, Alexander

(56) Entgegenhaltungen:
- GB-A- 451 741
- US-A- 1 538 542
- US-A- 1 975 405
- US-A- 3 146 024
- PATENT ABSTRACTS OF JAPAN Bd. 1999, Nr. 13, 30. November 1999 (1999-11-30) -& JP 11 217092 A (KAWADA MOKUZAI KOGEI KK), 10. August 1999 (1999-08-10)

## Beschreibung

Die Erfindung betrifft einen Fahrradsattel.

Fahrradsättel weisen eine beispielsweise aus Kunststoff hergestellte, relativ harte Sattelschale auf. Auf einer Oberseite der Sattelschale ist ein Polsterteil, das üblicherweise aus Schaummaterial hergestellt ist, angeordnet. Zum Fixieren des Polsterteils an der Sattelschale sowie zur Erzeugung einer widerstandsfähigen Oberfläche ist das Polsterteil von einer Deckschicht, die beispielsweise aus einem Nylonmaterial o.dgl. hergestellt sein kann, überspannt.

Bei modernen Fahrradsätteln ist im Zentralbereich des Sattels eine Durchgangsöffnung vorgesehen. Diese sich üblicherweise in Längsrichtung erstreckende Öffnung, die sich durch die Sattelschale, das Polsterteil und die Deckschicht erstreckt, dient zur Verbesserung des Sitzkomforts. Durch das Vorsehen dieser Öffnung werden unangenehme Druckstellen im Genitalbereich vermieden. Ferner wird durch die sich in Längsrichtung des Sattels erstreckende Öffnung die Querelastizität des Sattels verbessert. Von der Oberschenkel-Innenseite auf dem Fahrradsattel übertragener Druck kann somit vom Fahrradsattel besser elastisch aufgenommen werden. Derartige im Zentralbereich des Sattels angeordnete Öffnungen weisen jedoch den Nachteil auf, dass durch die Öffnung Spritzwasser an den Körper des Radfahrers gelangen kann. Dies ist äußerst unangenehm und kann bisweilen auch zu Blasenentzündungen u.dgl. führen.

US 1,538,542 (beinhaltet die Merkmale des Obergriffs des Anspruchs 1) beschreibt einen Fahrradsattel mit einer in seiner Mitte angeordneten Öffnung und einer an der Unterseite des Sattels angebrachten Metallplatte zur Stabilisierung der Sattelstruktur. Die Metallplatte ist durch mehrere Schrauben mit dem Fahrradsattel verbunden.

Aufgabe der Erfindung ist es, einen Fahrradsattel mit durchgehender Öffnung im Zentralbereich zu schaffen, bei dem Spritzwasser abgehalten ist.

Die Lösung der Aufgabe erfolgt erfindungsgemäß durch die Merkmale des Anspruchs 1.

Erfindungsgemäß weist der Sattel einen Spritzschutz auf. Der Spritzschutz ist erfindungsgemäß derart angeordnet, dass er die Öffnung in Form eines Deckels o.dgl. verschließt. Hierbei ist der Spritzschutz vorzugsweise aus einem elastischen Material hergestellt und/oder beweglich mit dem Fahrradsattel verbunden. Dies hat den Vorteil, dass die Querelastizität des Fahrradsattels trotz des Vorsehens eines Spritzschutzes in der Öffnung nicht oder nur unwesentlich verringert wird. Auf Grund der Beweglichkeit und/oder Flexibilität des Spritzschutzes weist dieser auch einen erheblichen Vorteil gegenüber einer durchgehenden Sattelschale auf, da bei einer durchgehenden Sattelschale zwar kein Spritzwasser an den Körper des Radfahrers gelangt, jedoch die Querelastizität des Fahrradsattels erheblich beeinträchtigt ist. Der Spritzschutz ist ferner nicht an einer Rückseite des Sattels entsprechend einem Schutzblech o.dgl. angeordnet, da hierdurch nur eine begrenzte Menge an Spritzwasser abgehalten werden kann. Zusätzlich hält der Spritzschutz Zugluft ab, wodurch der Sitzkomfort verbessert ist.

Der Spritzschutz kann abnehmbar bzw. einfach entfernbar ausgestaltet sein, um zu vermeiden, dass sich innerhalb der durch den Spritzschutz verschlossenen Öffnung des Fahrradsattels beispielsweise Regenwasser sammelt. Vorzugsweise weist der Spritzschutz jedoch mindestens eine Ablauföffnung auf, durch die das Wasser ablaufen kann. Vorzugsweise sind mehrere Ablauföffnungen vorgesehen, die vorzugsweise schlitzförmig ausgebildet sind. Zur Erhöhung der Querelastizität des Sattels verlaufen die Schlitze vorzugsweise in Längsrichtung des Sattels.

Bei einer besonders bevorzugten Ausführungsform, bei der der Spritzschutz vorzugsweise an der Sattelunterseite angeordnet ist, weist der Spritzschutz einen umlaufenden Rand auf. Der umlaufende Rand liegt an der Sattelunterseite an. Insbesondere ist es hierdurch möglich, die Deckschicht, die an der Sattelunterseite im Randbereich der Öffnung befestigt werden muss, zu fixieren. Insbesondere ist durch den Randbereich sichergestellt, dass eine beispielsweise in diesem Bereich verklebte Deckschicht durch die auftretenden Belastungen nicht abgelöst wird. Hierdurch weist der Spritzschutz zusätzlich zu seiner Funktion als Spritzschutz die Funktion eines Halteteils auf. Hierdurch kann die Produktion von Fahrradsätteln mit Öffnungen im zentralen Sitzbereich erheblich verbessert werden. Insbesondere ist die Gefahr von Beschädigungen des Polsterteils bei der Herstellung verringert. Auch ein Ausfransen der Deckschicht in diesem Bereich ist vermieden.

Der Spritzschutz ist vorzugsweise als Formteil ausgebildet. Im Gegensatz zu einem als Folie o.dgl. ausgebildeten Spritzschutz weist die Ausführung des Spritzschutzes als Formteil den Vorteil auf, dass ein Formteil erheblich stabiler ist und eine längere Lebensdauer hat. Vorzugsweise ist das Formteil im Querschnitt U-förmig.

Bei einer besonders bevorzugten Ausführungsform, bei der der Spritzschutz insbesondere als Formteil ausgebildet ist, erfolgt die Befestigung des Spritzschutzes am Sattel nur an dem in Richtung der Sattelspitze weisenden Ende des Spritzschutzes und/ oder an dem in Richtung der Sattelrückseite, d.h. in die gegenüberliegende Richtung weisenden Ende des Spritzschutzes. Es ist somit eine Relativbewegung zwischen dem Sattel und dem Spritzschutz quer zur Längsrichtung des Sattels möglich. Dies hat den Vorteil, dass durch den Spritzschutz die Querelastizität des Sattels nicht oder nur äußerst geringfügig beeinträchtigt wird. Auch bei dieser Ausführungsform weist der Spritzschutz vorzugsweise einen an der Sattelunterseite anliegenden Rand auf, durch den die Deckschicht gehalten ist.

Bei einer weiteren bevorzugten Ausführungsform weist der Spritzschutz ein Materialelement auf, das aus luftdurchlässigem, maschenartigem Material besteht. Bei dem Materialelement handelt es sich vorzugsweise um ein poröses Material. Insbesondere kann es sich bei dem Material um ein textilartiges, ggf. gewebtes oder gewirktes Material handeln. Als Material ist erfindungsgemäß besonders bevorzugt die Verwendung von einem Abstandsgewirk. Hierbei handelt es sich um beispielsweise aus Kunststofffasern hergestelltes, schlaufenartiges Material, das zumeist in Kombination mit Textilfasern einerseits luftdurchlässig ist, andererseits einen Feuchtigkeitstransport in eine Richtung zulässt. Geeignete Abstandsgewirke sind beispielsweise in DE 90 16 065, DE 196 35 170 und DE 199 10 785 beschrieben. Ferner ist es bevorzugt, dass die Maschendichte bzw. die Porosität auf der Seite des Materialelements, die dem Körper zugewandt ist, größer ist als auf der gegenüberliegenden, d.h. nach unten weisenden Seite und umgekehrt. Hierdurch ist insbesondere beim Verwenden von Abstandsgewirk ein Feuchtigkeitstransport vom Körper weg bzw. nach unten realisiert.

Vorzugsweise ist das Materialelement in einem Rahmen oder Halteelement gehalten. Die Verbindung zwischen dem Materialelement, bei dem es sich insbesondere um eine Art Stoffstück, insbesondere ein flächiges Stück Abstandsgewirk-Stoff handelt, erfolgt insbesondere durch Anspritzen des Rahmens an das Materialelement. Das Materialelement ist am Rand somit vorzugsweise durch einen aus Kunststoff bestehenden Rahmen umgeben. Ein äußerer Rand des Materialelements befindet sich hierbei innerhalb des Kunststoffrahmens. Der Rahmen ist vorzugsweise derart ausgebildet, dass er in die in der Sattelschale vorgesehene Öffnung eingesteckt werden kann und in der Öffnung klemmend hält. Ebenso kann ein Halteelement, wie beispielsweise ein Rastelement vorgesehen sein, durch das der Rahmen vorzugsweise lösbar in der Öffnung gehalten ist. Hierdurch ist es möglich, den Spritzschutz beispielsweise zum Reinigen oder zum Erneuern aus der Öffnung der Sattelschale zu entnehmen.

Bei einer weiteren bevorzugten Ausführungsform ist insbesondere der gesamte Spritzschutz als Materialelement ausgebildet. Das als Stofflage oder dgl. ausgebildete Materialelement weist keinen Rahmen aus Kunststoff oder dgl. auf. Um das Materialelement lösbar mit der Sattelschale, insbesondere der Unterseite der Sattelschale verbinden zu können, ist beispielsweise ein Klettverschluss vorgesehen. Anstelle eines Klettverschlusses kann auch eine andere Art lösbare Verbindung vorgesehen sein, wie z.B. eine Einschubmöglichkeit. Insbesondere ist es auch möglich, ein Klebeband bzw. eine Klebeschicht vorzusehen. Bei einem derartigen Spritzschutz handelt es sich sodann um einen Einwegartikel, der nach einer entsprechenden Verschmutzung ausgetauscht werden kann.

Nachfolgend wird die Erfindung anhand einer bevorzugten Ausführungsform unter Bezugnahme auf die anliegenden Zeichnungen näher erläutert.

Es zeigen:

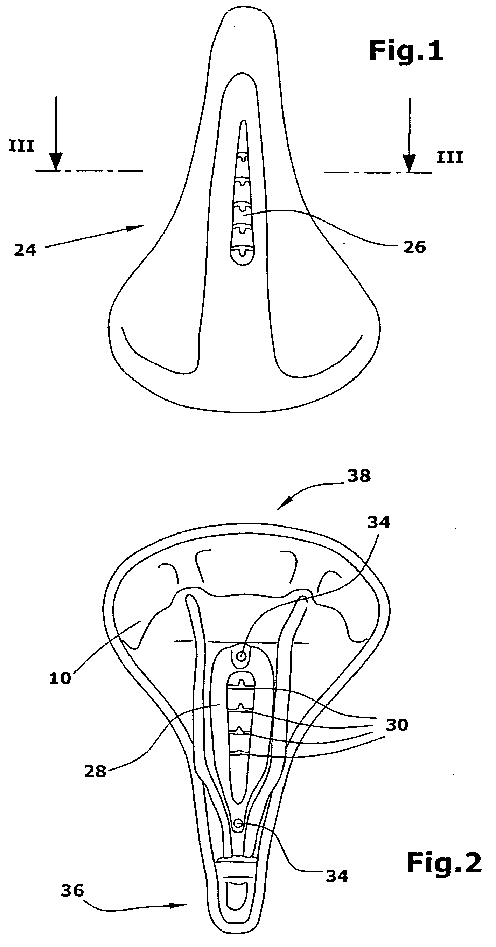

- Fig. 1: eine schematische Draufsicht eines Fahrradsattels,
- Fig. 2: eine schematische Ansicht einer Unterseite des Fahrradsattels,
- Fig. 3: eine schematische Schnittansicht entlang der Linie III-III in Fig. 1,
- Fig. 4: eine schematische Schnittansicht des Fahrradsattels einer zweiten Ausführungsform des Spritzschutzes, und
- Fig. 5: eine schematische Schnittansicht des Fahrradsattels einer dritten bevorzugten Ausführungsform des Spritzschutzes.

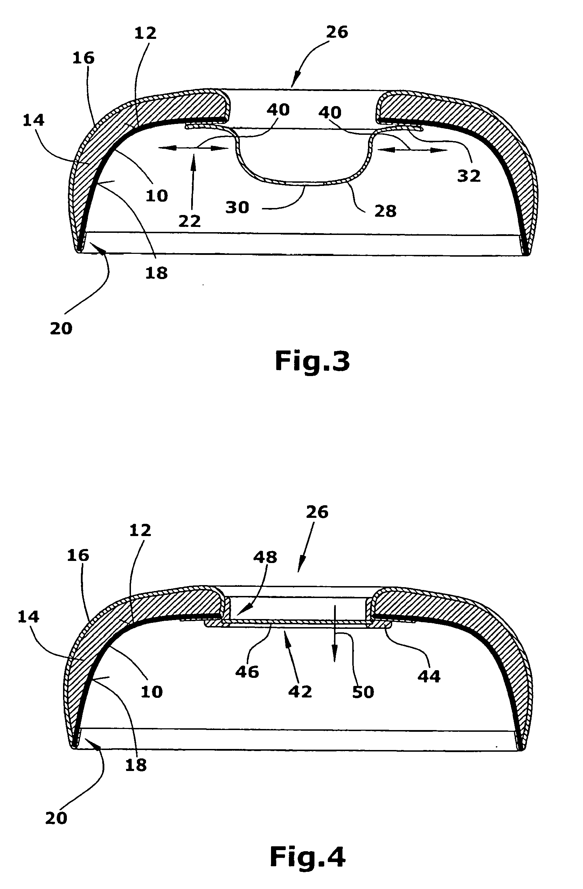

Der Fahrradsattel weist eine Sattelschale 10 auf, wobei an der Oberseite 12 (Fig. 3) der Sattelschale 10 ein Polsterteil 14 vorgesehen ist. Das Polsterteil 14 ist mit einer Deckschicht 16 überspannt. Die Deckschicht 16 ist an einer Unterseite 18 des Sattels im unteren Randbereich 20 sowie in einem zentralen Randbereich 22, beispielsweise durch Verkleben, befestigt.

Der zentrale Randbereich 22 umgibt eine im Zentralbereich 24 vorgesehene Öffnung 26, die sich in Längsrichtung des Sattels erstreckt.

Die Öffnung 26 ist durch einen Spritzschutz 28 verschlossen. Bei dem Spritzschutz 28 handelt es sich um ein vorzugsweise aus Kunststoff hergestelltes Formteil mit U-förmigem Querschnitt (Fig. 3). Der Spritzschutz 28 weist in seinem tiefen Bereich mehrere im dargestellten Ausführungsbeispiel parallel zueinander und schlitzförmig ausgebildete Ablauföffnungen 30 auf, die zusätzlich eine Belüftung bewirken können. Die Ablauföffnungen dienen zum Abführen von sich in der Senke der durch den Spritzschutz 28 verschlossenen Öffnung 26 ansammelnden Wasser.

Der Spritzschutz 28 weist einen umlaufenden Rand 32 auf. Der umlaufende Rand 32 verläuft im Wesentlichen parallel zur Unterseite der Sattelschale 10 im Randbereich 22 der Öffnung 26. Im dargestellten Ausführungsbeispiel liegt der Randbereich 32 an der Unterseite der Sattelschale 10 an, wobei zwischen dem Randbereich 32 und der Sattelschale 10 der Rand der Deckschicht 16 angeordnet ist.

Im dargestellten Ausführungsbeispiel ist der Spritzschutz 28 mit zwei Nieten 34 an der Sattelschale 10 befestigt. Die Nieten 34 sind einerseits an dem in Richtung einer Sattelspitze 36 weisenden Ende des Spritzschutzes 28 und andererseits an der gegenüberliegenden Seite, d.h. in Richtung einer Sattelrückseite 38, weisenden Ende angeordnet. Der Spritzschutz 28 ist somit an den quer zur Längsrichtung verlaufenden Seiten befestigt. An den parallel zur Längsrichtung verlaufenden Seiten bzw. Rändern 32 des Spritzschutzes 28 sind keine Befestigungen vorgesehen. Hierdurch ist es möglich, im Bereich der Ränder 32 des Spritzschutzes 28 eine Querbewegung in Richtung der Pfeile 40 (Fig. 3) zu ermöglichen, so dass eine Querelastizität des Sattels gewährleistet ist.

Bei einer weiteren bevorzugten Ausführungsform (Fig. 4) ist die Öffnung 26 des Sattels durch einen Spritzschutz 42 verschlossen. Der Spritzschutz 42 weist einen aus Kunststoff hergestellten Rahmen 44 auf. Der Rahmen 44 ist vorzugsweise durch Spritzgießen hergestellt, wobei ein Materialelement 46, bei dem es sich vorzugsweise um eine stoffartige Lage Abstandsgewirk handelt, im Randbereich 48 von dem Rahmen 44 umspritzt ist, so dass im Randbereich 44 das Materialelement 46 innerhalb des Rahmens 44 angeordnet ist. Das Materialelement 42, das vorzugsweise aus einem Abstandsgewirk hergestellt ist, dient somit als Spritzschutz, ist andererseits aber luftdurchlässig. Insbesondere wird als Materialelement 46 ein Abstandsgewirk eingesetzt, das Feuchtigkeit vom Körper weg, d.h. in Richtung eines Pfeils 50, transportiert.

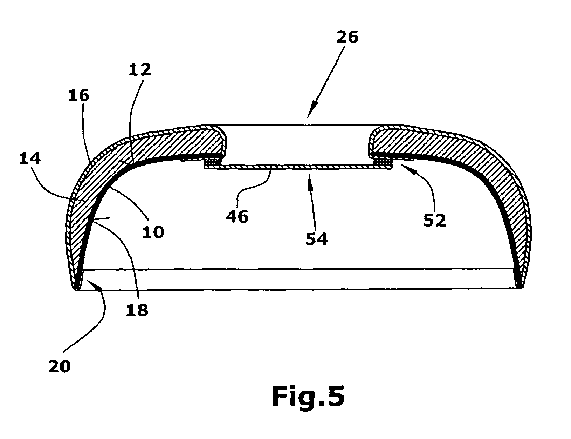

Bei einer weiteren bevorzugten Ausführungsform (Fig. 5) ist im Unterschied zu dem in Fig. 4 dargestellten Ausführungsbeispiel kein Rahmen 44 vorgesehen. Das Materialelement 46, bei dem es sich wiederum vorzugsweise um das anhand Fig. 4 beschriebene Abstandsgewirk handelt, ist über Halteelemente 52 mit der Unterseite 18 der Sattelschale 10 verbunden. Bei den Halteelementen handelt es sich insbesondere um Klettverschlüsse, die einerseits im Randbereich des Materialelements 46, und andererseits an der Unterseite der Sattelschale 10 vorgesehen sind.

## Patentansprüche

1. Fahrradsattel, mit
einer Sattelschale (10),
einem auf einer Oberseite (12) der Sattelschale (10) angeordneten Polsterteil (14),
einer das Polsterteil (14) überspannenden Deckschicht (16) und
einem im Zentralbereich des Sattels vorgesehenen, sich durch die Sattelschale (10), das Polsterteil (14) und die Deckschicht (16) erstreckenden Öffnung (26),
**dadurch gekennzeichnet, dass**
der Fahrradsattel im Bereich der Öffnung (26) in Querrichtung (40) elastisch ist und
die Öffnung (26) mit einem Spritzschutz (28, 42, 54) versehen ist, wobei der Spritzschutz (28, 42, 54) derart ausgebildet ist, dass die Elastizität des Fahrradsattels in Querrichtung (40) im Bereich der Öffnung (26) im wesentlichen erhalten bleibt.

2. Fahrradsattel nach Anspruch 1, **dadurch gekennzeichnet, dass** der Spritzschutz (28) mindestens eine Ablauföffnung (30) aufweist.

3. Fahrradsattel nach Anspruch 1 oder 2, **dadurch gekennzeichnet, dass** der Spritzschutz (28, 42, 54) an der Sattelunterseite (18) angeordnet ist.

4. Fahrradsattel nach einem der Ansprüche 1-3, **dadurch gekennzeichnet, dass** der Spritzschutz (28, 42, 54) einen umlaufenden, an der Sattelunterseite (18) anliegenden Rand (32) aufweist.

5. Fahrradsattel nach einem der Ansprüche 1-4, **dadurch gekennzeichnet, dass** der Spritzschutz (28) im Querschnitt im Wesentlichen U-förmig ist.

6. Fahrradsattel nach einem der Ansprüche 1-5, **dadurch gekennzeichnet, dass** der Spritzschutz (28) als Formteil ausgebildet ist.

7. Fahrradsattel nach einem der Ansprüche 1-6, **dadurch gekennzeichnet, dass** der Spritzschutz (28) nur an dem in Richtung der Sattelspitze (36) und/ oder dem in Richtung der Sattelrückseite (38) weisenden Ende des Spritzschutzes (28) an dem Fahrradsattel befestigt ist.

8. Fahrradsattel nach einem der Ansprüche 1-7, **dadurch gekennzeichnet, dass** der Spritzschutz (42, 54) zumindest teilweise aus einem luftdurchlässigen, maschenartigen Materialelement (46) besteht.

9. Fahrradsattel nach Anspruch 8, **dadurch gekennzeichnet, dass** der Spritzschutz (42) einen Rahmen (44) aufweist, der das Materialelement (46) trägt.

10. Fahrradsattel nach Anspruch 9, **dadurch gekennzeichnet, dass** der Rahmen (44) an das Materialelement (46) angespritzt ist.

11. Fahrradsattel nach einem der Ansprüche 1-10, **dadurch gekennzeichnet, dass** der Spritzschutz (54) lösbar mit der Sattelschale (10) verbunden ist.

## Claims

1. A bicycle saddle comprising
a saddle shell (10),
a cushioning member (14) arranged on an upper side (12) of the saddle shell (10),
a cover layer (16) spanning the cushioning member (14), and
an opening (26) provided in the central region of the saddle and extending through the saddle shell (10), the cushioning member (14) and the cover layer (16),
**characterized in that**,
in the region of the opening (26), the bicycle saddle is elastic in the transverse direction (40), and
the opening (26) is provided with a splash guard (28,42,54), the splash guard (28,42,54) being of a design adapted to substantially maintain the elasticity of the bicycle saddle in the transverse direction (40) in the region of the opening (26).

2. The bicycle saddle according to claim 1, **characterized in that** the splash guard (28) is provided with at least one drain opening (30).

3. The bicycle saddle according to claim 1 or 2, **characterized in that** the splash guard (28,42,54) is arranged on the underside (18) of the saddle.

4. The bicycle saddle according to any one of claims 1-3, **characterized in that** the splash guard (28,42,54) comprises a surrounding edge portion (32) abutting the underside (18) of the saddle.

5. The bicycle saddle according to any one of claims 1-4, **characterized in that** the splash guard (28) has a substantially U-shaped cross section.

6. The bicycle saddle according to any one of claims 1-5, **characterized in that** the splash guard (28) is provided as a moulded part.

7. The bicycle saddle according to any one of claims 1-6, **characterized in that** the splash guard (28) is fastened to the bicycle saddle only at the end of the splash guard (28) directed toward the saddle tip (36) and/or the end of the splash guard (28) directed toward the rear (38) of the saddle.

8. The bicycle saddle according to any one of claims 1-7, **characterized in that** the splash guard (42,54) is at least partially made of an air-permeable, mesh-like material member (46).

9. The bicycle saddle according to claim 8, **characterized in that** the splash guard (42) comprises a frame (44) carrying said material member (46).

10. The bicycle saddle according to claim 9, **characterized in that** the frame (44) has been injection-moulded to said material member (46).

11. The bicycle saddle according to any one of claims 1-10, **characterized in that** the splash guard (54) is detachably connected to the saddle shell (10).

## Revendications

1. Selle de bicyclette comportant
une coque de selle (10),
un élément de rembourrage (14) disposé sur la face supérieure (12) de la coque de selle (10),
une couche de finition (16) recouvrant l'élément de rembourrage (14) et
une ouverture (26) prévue dans la zone centrale de la selle, s'étendant à travers la coque de selle (10), l'élément de rembourrage (14) et la couche de finition (16),
**caractérisée en ce que**
la selle de bicyclette est élastique dans la zone de l'ouverture (26) dans le sens transversal (40) et
**en ce que** l'ouverture (26) est munie d'une garde-boue (28, 42, 54), la garde-boue (28, 42, 54) étant réalisée de telle sorte que l'élasticité de la selle de bicyclette dans le sens transversal dans la zone de l'ouverture (26) reste sensiblement maintenue.

2. Selle de bicyclette selon la revendication 1, **caractérisée en ce que** la garde-boue (28) présente au moins une ouverture d'évacuation (30).

3. Selle de bicyclette selon la revendication 1 ou 2, **caractérisée en ce que** la garde-boue (28, 42, 54) est disposée sur la face inférieure (18) de la selle.

4. Selle de bicyclette selon l'une des revendications 1 à 3, **caractérisée en ce que** la garde-boue (28, 42, 54) présente un bord (32) périphérique, adjacent à la face inférieure (18) de la selle.

5. Selle de bicyclette selon l'une des revendications 1 à 4, **caractérisée en ce que** la garde-boue (28) a essentiellement une forme de U en section transversale.

6. Selle de bicyclette selon l'une des revendications 1 à 5, **caractérisée en ce que** la garde-boue (28) est réalisée en tant que pièce moulée.

7. Selle de bicyclette selon l'une des revendications 1 à 6, **caractérisée en ce que** la garde-boue (28) est fixée sur la selle de bicyclette uniquement à l'extrémité, orientée dans la direction de la pointe (36) de la selle et/ou dans la direction de la face arrière (38) de la selle de la garde-boue (28).

8. Selle de bicyclette selon l'une des revendications 1 à 7, **caractérisée en ce que** la garde-boue (42, 54) est constituée au moins en partie d'un élément de matériau (46) perméable à l'air du type à mailles.

9. Selle de bicyclette selon la revendication 8, **caractérisée en ce que** la garde-boue (42) présente un cadre (44) qui supporte l'élément de matériau (46).

10. Selle de bicyclette selon la revendication 9, **caractérisée en ce que** le cadre (44) est moulé par injection sur l'élément de matériau (46).

11. Selle de bicyclette selon l'une des revendications 1 à 10, **caractérisée en ce que** la garde-boue (54) est assemblée de façon amovible avec la coque de selle (10).
